# EUROPÄISCHE PATENTSCHRIFT

(11) **EP 3 556 521 B1**
(45) Veröffentlichungstag und Bekanntmachung des Hinweises auf die Patenterteilung: **24.05.2023**
(21) Anmeldenummer: 18168059.6
(22) Anmeldetag: 18.04.2018
(51) Int. Cl.: B25J 9/16

(54) **BREMSWEGÜBERWACHUNG EINER KINEMATIK**
BRAKE PATH MONITORING OF A KINEMATIC
SURVEILLANCE DE LA DISTANCE DE FREINAGE D'UNE CINÉMATIQUE

(43) Veröffentlichungstag der Anmeldung: 23.10.2019
(73) Patentinhaber: B&R Industrial Automation GmbH, 5142 Eggelsberg (AT)
(72) Erfinder: Dirschlmayr, Thomas, 5301 Eugendorf (AT); Kapeller, Thomas, 5300 Hallwang (AT)
(74) Vertreter: Patentanwälte Pinter & Weiss OG

(56) Entgegenhaltungen:
- EP-A1- 2 072 195
- ZANCHETTIN ANDREA MARIA ET AL: "Safety in Human-Robot Collaborative Manufacturing Environments: Metrics and Control", IEEE TRANSACTIONS ON AUTOMATION SCIENCE AND ENGINEERING, IEEE SERVICE CENTER, NEW YORK, NY, US, Bd. 13, Nr. 2, 1. April 2016 (2016-04-01), Seiten 882-893, XP011605470, ISSN: 1545-5955, DOI: 10.1109/TASE.2015.2412256 [gefunden am 2016-04-05]
- THOMAS DIETZ ET AL: "Simulation of the stopping behavior of industrial robots using a complementarity-based approach", ADVANCED INTELLIGENT MECHATRONICS (AIM), 2011 IEEE/ASME INTERNATIONAL CONFERENCE ON, IEEE, 3. Juli 2011 (2011-07-03), Seiten 428-433, XP032053515, DOI: 10.1109/AIM.2011.6027053 ISBN: 978-1-4577-0838-1

## Beschreibung

Die gegenständliche Erfindung behandelt ein Verfahren zur Steuerung einer Kinematik, die in einem Kinematikkoordinatensystem mittels gelenkig miteinander verbundener Einzelachsen modelliert wird, wobei zumindest eine der Einzelachsen mit einem Ursprung des Kinematikkoordinatensystems verbunden ist und sich zumindest eine der Einzelachsen relativ zum Ursprung bewegt.

Da Fertigungsprozesse auf dem Gebiet der Robotik auf immer kleinerem Raum realisiert werden sollen, überschneiden sich die Arbeitsbereiche von Robotern (allgemein auch als Kinematik bezeichnet) oft mit denen von anderen Objekten wie ortsfesten Installationen, Robotern, Maschinen oder Menschen. Als Kinematik werden sowohl serielle Kinematiken, als auch parallele Kinematiken, aber auch Mischungen davon, verstanden, wobei eine serielle oder parallele Kinematik in bekannter Weise eine Anzahl von miteinander, über starre Verbindungselemente, seriell oder parallel (z.B. Tripod oder Hexapod) verbundene Gelenke aufweist. Um einen reibungslosen Ablauf garantieren zu können, muss daher sichergestellt werden, dass keine Kollisionen zwischen einem Roboter und anderen Objekten in diesen gemeinsam genutzten Arbeitsräumen auftreten. Ebenso sind im Arbeitsraum von Kinematiken oftmals Arbeitsbereiche und/oder Sicherheitsbereiche definiert, die von der Kinematik, oder Teilen davon, nicht verlassen werden bzw. nicht passiert werden dürfen. Insbesondere ist aufgrund hoher und steigender Sicherheitsanforderungen der Schutz für Menschen und Objekte zu gewährleisten.

Es existieren bereits verschiedene Modelle von Kollisionsüberwachungen, welche meist einen Kompromiss aus Genauigkeit, Flexibilität und erforderlicher Rechenleistung darstellen. Meist werden sowohl Roboter(teile), als auch Arbeitsraumgrenzen mithilfe geometrischer Körper (Kugeln, Pyramiden, Voxels) approximiert und während der Bewegung des Roboters laufend überprüft, ob es räumliche Überschneidungen zwischen diesen geometrischen Körpern gibt. Somit wird dafür gesorgt, dass ein Roboter einen gewissen Arbeitsbereich (Work Space) nicht verlässt bzw. einen gewissen Sicherheitsbereich (Safe Space) nicht betritt. Dies wird meist durch Berechnung von Schnittpunkten/Schnittlinien/Schnittflächen geometrischer Körper (z.B. zwischen einem approximierten Roboterarm und einem Sicherheitsbereich) erreicht, was jedoch rechenaufwändig ist. Gerade im Bereich Sicherheit sind jedoch ein geringerer Rechenaufwand und damit eine schnelle Reaktionszeit wünschenswert. Je geringer die Reaktionszeit, umso später muss der Roboter auf kritische Situationen reagieren. Neben der Position ist auch ein Bremsweg einer Kinematik während des Betriebs zu berücksichtigen. Wird zu einem Bremszeitpunkt ein Bremsvorgang eingeleitet, so bewegen sich die Gelenke und Arme eines Roboters weiter, bis sie in einer Endposition verharren. Es muss sichergestellt werden, dass bei Einleitung einer Bremsung durch die unvermeidbare Bremsbewegung der Kinematik Arbeitsräume nie verlassen und Sicherheitsbereiche nie betreten werden. Eine bekannte Herangehensweise zur Berücksichtigung des Bremswegs ist es einen Kreis bzw. eine Kugel als möglichen Bremsweg anzunehmen, wobei der Radius des Kreises bzw. der Kugel sich aus der Summe der möglichen Einzelbremswege von Einzelachsen zusammensetzt. Diese Methode ist zwar hinsichtlich der Rechenzeit sehr effizient, jedoch auch sehr konservativ, da der Bereich, der bei einem Bremsvorgang tatsächlich überstrichen wird bzw. werden kann, in der Regel nur einen Bruchteil des ermittelten Bremswegs darstellt. Durch diese großzügige Auslegung des Bremsbereichs kann es somit vorkommen, dass eine Bremsung eingeleitet wird, obwohl gar keine Kollisionsgefahr besteht.

In Zachettin Andrea Mara et al: "Safety in Human-Robot Collaborative Manufacturing Envorinments: Metcrics and Control", IEEE Transactons on Automation Science and Engineering, Bd. 13, Nr. 2 wird basierend einer Anfangsposition und einer Bremszeit einer Roboterachse ein Arbeitsbereich ermittelt, welcher abhängig von der Geschwindigkeit einer Roboterachse verkleinert und vergrößert wird. Die EP 2 072 195 A1 hingegen beschreibt eine Änderung der Geschwindigkeit einer Roboterachse abhängig vom Abstand zu einer Arbeitsraumgrenze.

Es ist somit die Aufgabe der vorliegenden Erfindung ein Verfahren zur Steuerung einer Kinematik anzugeben, wobei ein bei einem Bremsvorgang von der Kinematik möglicherweise überstrichener Bremsbereich mit erhöhter Genauigkeit und Effizienz berechnet wird.

Diese Aufgabe wird erfindungsgemäß durch das in Anspruch 1 definierte Verfahren gelöst. Im Rahmen der Erfindung wird dabei unter anderem bei einem Bremsvorgang für einen mit einer Einzelachse gekoppelten Punkt aus einer Anfangsposition des Punktes, einer vektoriellen Geschwindigkeit zumindest einer Einzelachse und einer minimalen Verzögerung zumindest einer Einzelachse zumindest eine virtuelle Endposition des Punktes ermittelt wobei die Ausdehnung einer Einhüllenden aus der Anfangsposition und der zumindest einen virtuellen Endposition berechnet wird. Ein Bremsbereich des Punktes wird durch die Einhüllende der Anfangsposition und der zumindest einen Endposition bestimmt und der Bremsbereich bei der Steuerung der Kinematik berücksichtigt. "Vektorielle Geschwindigkeit" bedeutet, dass neben dem Betrag der Geschwindigkeit auch die Richtung der Geschwindigkeit berücksichtigt wird, wobei die vektorielle Geschwindigkeit der Anfangsgeschwindigkeit bei Einleiten des Bremsvorgangs entspricht. Eine vektorielle Geschwindigkeit einer bewegten Drehgelenksachse kann als Winkelgeschwindigkeit entlang einer zugehörigen Drehachse beschreiben werden und eine vektorielle Geschwindigkeit einer Schubgelenksachse als Geschwindigkeit entlang einer zugehörigen Schubachse.

Während des Bremsvorgangs verringert sich die jeweilige Geschwindigkeit natürlich aufgrund der auftretenden Verzögerung weiterhin. Die ermittelte virtuelle Endposition entspricht in der Regel natürlich nicht der tatsächlichen Endposition des Punkts nach dem Bremsvorgang, wobei der Punkt die virtuelle Endposition jedoch schon erreichen könnte - wenn einerseits die betreffende Einzelachse tatsächlich mit der minimalen Verzögerung verzögert wird und andererseits keine weitere Einzelachse in Bewegung, bzw. am Bremsvorgang beteiligt ist. Die minimale Verzögerung kann gegeben sein oder berechnet werden und beschreibt die Verzögerung, mit welcher die zumindest eine Einzelachse während des Bremsvorgangs garantiert verzögert werden kann. Es wird also sichergestellt, dass der Punkt garantiert innerhalb des ermittelten Bremsbereichs zum Stillstand kommt. Die minimale Verzögerung kann aus den dynamischen Eigenschaften von Teilen der Kinematik, beispielsweise der Masse einer Einzelachse, sowohl während des Betriebs der Kinematik als auch vorab ermittelt werden. Natürlich kann die minimale Verzögerung auch vorab oder während des Betriebs, z.B. als externer Parameter vorgegeben werden, etc.

Die Verzögerung der zumindest einen Einzelachse wirkt gegen die Geschwindigkeit der zumindest einen Einzelachse und stellt somit eine negative, gegen die Geschwindigkeit gerichtete Beschleunigung dar. Die minimale Verzögerung der betrachteten Einzelachse ergibt sich zum Bremszeitpunkt aus einem verfügbaren Bremsmoment, der Beladung, etc., kann auch mit der aktuellen Geschwindigkeit, usw. in Beziehung stehen, oder auch vorab bekannt sein. Eine vorgegebene minimale Verzögerung für eine bestimmte Beladung der Kinematik kann beispielsweise aus einem Datenblatt entnommen werden. Es kann für die für das Verfahren verwendete minimale Verzögerung ein geringerer Wert als für die vorgegebene minimale Verzögerung angenommen werden um einen zusätzlichen Sicherheitsfaktor zu realisieren. Damit kann der Fall, dass z.B. ein Motor der Kinematik aufgrund einer Fehlfunktion nicht so stark bremsen kann, wie vorgegeben oder die Beladung der Kinematik schwerer ist als vorgegeben, etc. berücksichtigt werden.

Es wird im Gegensatz zum Verfahren nach dem Stand der Technik kein Kinematikobjekt als dreidimensionaler geometrischer Körper modelliert. Stattdessen kann für die Ermittlung des Bremswegs zumindest eine Endposition eines Punkts der Kinematik als zu überwachendes Objekt betrachtet werden, wobei die Kinematik durch eine Anzahl an Einzelachsen (linienförmige, d.h. eindimensionale Objekte), die beispielsweise jeweils zwei Kinematikobjekte, z.B. Gelenknaben (punktförmige, d.h. nulldimensionale Objekte) verbinden, modelliert werden. Der betrachtete Punkt kann sich dabei auf einer modellierten Einzelachse oder einem Kinematikobjekt der Kinematik befinden, muss aber zumindest mit einer Einzelachse gekoppelt sein, z.B. sich mit einer Einzelachse bewegen. Dazu kann sich der Punkt jedoch außerhalb der (durch Einzelachsen und Kinematikobjekte modellierten) Kinematik befinden. Der Bremsvorgang wird zu einem Bremszeitpunkt, zu dem sich der Punkt in der Anfangsposition befindet, eingeleitet. Es wird zumindest eine virtuelle Endposition des Punktes aus der vektoriellen Geschwindigkeit und der gegebenen minimalen Verzögerung zumindest einer Einzelachse ermittelt und zumindest ein Bremsvektor kann aus der Anfangsposition und der zumindest einen virtuellen Endposition ermittelt werden.

Die Einhüllende ist ein zweidimensionales oder dreidimensionales Objekt, welches den zumindest einen ermittelten Bremsvektor umfasst. In einfacher Weise kann die Einhüllende den zumindest einen Bremsvektor exakt umhüllen, was jedoch nur sinnvoll ist, wenn der zumindest eine Bremsvektor nicht von der virtuellen Teilbewegung des Punkts während des Bremsvorgangs abweicht, bzw. abweichen kann. Dieser Fall tritt beispielsweise ein, wenn nur ein Bremsvektor vorhanden ist, der zudem durch die Bewegung nur einer Schubgelenksachse gebildet wird.

Vorteilhafterweise kann die Ausdehnung der Einhüllenden E aus der Anfangsposition, der zumindest einen virtuellen Endposition und einer sich daraus ergebenden virtuellen Teilbewegung berechnet werden.

Als virtuelle Teilbewegung wird eine mögliche Trajektorie verstanden, die im Rahmen des erfindungsgemäßen Verfahrens unter Verwendung der minimalen Verzögerung aus der virtuellen Endposition ermittelt wird. Die tatsächliche Trajektorie als tatsächlicher Bewegungspfad des Punktes während des Bremsvorgangs ist natürlich unbekannt, u.a. da üblicherweise die tatsächlich auftretende Verzögerung nicht bekannt ist.

Da jedoch meist mehrere Einzelachsen an der Bewegung und am Bremsvorgang beteiligt sind, kann die virtuelle Teilbewegung des Punktes üblicherweise nicht als gerade Verbindung von Anfangspunkt und Endpunkt angesehen werden. Die tatsächliche Trajektorie ist wie auch die tatsächliche Endposition nicht bekannt. Die Einhüllende kann aber derart gewählt werden, dass alle Trajektorien, die während des Bremsvorgangs auftreten könnten, von der Einhüllenden umhüllt werden, falls die minimale Verzögerung eingehalten wird, was vorausgesetzt wird. Die virtuellen Teilbewegungen können dann ausgehend vom Anfangspunkt und zumindest einen Endpunkt berechnet werden, und die Einhüllende derart gestaltet werden, dass sie alle virtuellen Teilbewegungen möglichst genau umfasst. Damit können sich komplexe Geometrien für die Einhüllende ergeben, was meist einen hohen Rechenaufwand zur Folge hat, welcher jedoch mit geeigneten Algorithmen gering gehalten werden kann.

Um den Rechenaufwand zu verringern, können als Einhüllende auch einfache geometrische Formen, wie Rechtecke (im zweidimensionalen Raum) oder Quader (im dreidimensionalen Raum), die aus dem Anfangspunkt und zumindest einen Endpunkt berechnet werden (und natürlich immer Anfangspunkt und zugehörigen zumindest einen Endpunkt, bzw. die virtuellen Teilbewegungen umfassen müssen), ermittelt werden, wie weiter unten beschrieben wird.

Es wird vorteilhafterweise die zumindest eine virtuelle Endposition des Punktes aus der Anfangsposition des Punktes, einer vektoriellen Geschwindigkeit jeder bewegten Einzelachse und einer minimalen Verzögerung jeder bewegten Einzelachse ermittelt. Damit wird die Bewegung, d.h. die vektorielle Geschwindigkeit und die minimale Verzögerung, jeder Einzelachse bei der Ermittlung der virtuellen Endposition direkt berücksichtigt. Die vektorielle Geschwindigkeit des Punktes ergibt sich somit als Linearkombination von vektoriellen Geschwindigkeiten der bewegten Einzelachsen.

Es wird allgemein zumindest eine virtuelle Endposition des Punktes aus der vektoriellen Geschwindigkeit und der gegebenen minimalen Verzögerung zumindest einer (oder auch jeder) Einzelachse ermittelt. Es kann jedoch auch zumindest ein Bremsvektor, welcher die Anfangsposition mit der zumindest einen virtuellen Endposition verbindet, ermittelt werden und die Ausdehnung einer Einhüllenden aus dem zumindest einen Bremsvektor berechnet werden.

In einfacher Weise kann die Einhüllende den zumindest einen Bremsvektor exakt umhüllen, was jedoch nur sinnvoll ist, wenn der zumindest eine Bremsvektor nicht von der virtuellen Teilbewegung des Punkts während des Bremsvorgangs abweicht, bzw. abweichen kann. Dieser Fall tritt beispielsweise ein, wenn nur ein Bremsvektor vorhanden ist, der zudem durch die Bewegung nur einer Schubgelenksachse gebildet wird.

Die Bremsvektoren können vorteilhafterweise aus einer Linearkombination von Basisbremsvektoren gebildet werden, wobei jeder Basisbremsvektor einer Einzelachse zugeordnet wird und die Anfangsposition des Punktes mit einer zugehörigen virtuellen Endposition des Punktes verbindet, wobei die zugehörige virtuelle Endposition des Punktes aus der Anfangsposition des Punktes, einer vektoriellen Geschwindigkeit der zugeordneten Einzelachse und der minimalen Verzögerung der zugeordneten Einzelachse ermittelt wird, wobei für jeden Basisbremsvektor jeweils die Annahme getroffen wird, dass die nicht zugeordneten Einzelachsen sich nicht weiterbewegen. Um den Bremsbereich zu ermitteln, wird die mögliche Trajektorie des Punkts in einzelne virtuelle Teilbewegungen zerlegt. Die Endposition eines einer solchen virtuellen Teilbewegung folgenden Punkts, entspricht der virtuellen Endposition. Die virtuellen Teilbewegungen decken gewissermaßen den "worst case" Fall ab, da sie auf Basis der minimalen Verzögerung ermittelt werden. Der Bremsbereich wird durch Kombination der einzelnen virtuellen Teilbewegungen ermittelt und entspricht dem Bereich, in welchem sich die reale Trajektorie mit Sicherheit befinden wird - natürlich immer unter der Voraussetzung, dass zumindest die minimale Verzögerung wirkt. Die Ausdehnung der Einhüllenden wird erfindungsgemäß aus den Bremsvektoren angenähert, wobei die Einhüllende idealerweise alle virtuellen Teilbewegungen des Punkts derart umfasst, dass die Einhüllende eine möglichst geringe Ausdehnung aufweist.

Es kann zumindest ein Teil der Einzelachsen als Schubgelenkachsen ausgestaltet sein. Eine virtuelle Teilbewegung eines Punktes beschreibt bei Ausfahren (nur) einer Schubgelenksachse eine Gerade, wenn der betrachtete Punkt mit der jeweiligen Schubgelenksachse gekoppelt ist oder mit einer Einzelachse gekoppelt ist, die mit der Schubgelenksachse verbunden ist. Die vektorielle Geschwindigkeit einer Schubgelenksachse wirkt also entlang dieser Geraden. Diese virtuelle Teilbewegungen entsprechen somit den (Basis)Bremsvektoren, wenn die Einzelachse mit der minimalen Verzögerung verzögert wird, womit die Ermittlung der virtuellen Teilbewegungen aus den Bremsvektoren trivial wäre. Die tatsächliche beim Bremsvorgang beschriebene Trajektorie des Punkts könnte auch kürzer sein, wenn die Einzelachse mit einer größeren, als mit der minimalen Verzögerung gebremst wird.

Bei der Berücksichtigung mehrerer bewegter Schubgelenksachsen kann die Ermittlung einer möglichst gering ausgedehnten Einhüllenden dennoch einen erhöhten Aufwand verursachen. Es kann jedoch zumindest ein Teil der Einzelachsen als Drehgelenkachsen ausgestaltet sein, womit die Betrachtung von Bremsvektoren alleine nicht ausreichend ist, da die reale Bewegung des Punktes aufgrund nur dieses einen Drehgelenks einen Kreisbogen darstellt. Die vektorielle Geschwindigkeit einer Drehgelenksachse wirkt entlang dieses Kreisbogens. Bremsvektor und Kreisbogen unterscheiden sich demzufolge um ein Kreissegmentstück. Eine rechnerische exakte Berücksichtigung dieser Abweichung wäre grundlegend sehr aufwändig.

Vorteilhafterweise wird für den Punkt aus der Anfangsposition, der vektoriellen Geschwindigkeit der zumindest einen Einzelachse und zumindest einer weiteren Verzögerung der zumindest einen Einzelachse, die größer als die minimale Verzögerung der zumindest einen Einzelachse ist, zumindest eine weitere virtuelle Endposition des Punktes Der Bremsbereich des Punkts wird durch eine Einhüllende der Anfangsposition und der zumindest einen Endposition und der zumindest einen weiteren Endposition bestimmt, wobei die Ausdehnung der Einhüllenden aus der Anfangsposition, der zumindest einen Endposition und der zumindest einen weiteren Endposition berechnet wird. Damit kann die virtuelle Teilbewegung des Punkts über weitere Endpositionen, die sich aus einer größeren, als der minimalen Verzögerung ergeben, angenähert werden. Würden unendlich viele weitere Endpositionen ermittelt werden, so würde sich aus der Schar der Anfangsposition und Endpositionen die virtuelle Teilbewegung für alle Verzögerungen bis hin zur minimalen Verzögerung ergeben.

Es kann die Einhüllende auch einen erweiterten Bereich, welcher einfacher berechenbar ist, abdecken.

In der gegenständlichen Beschreibung werden zur besseren Anschaulichkeit Bremsvektoren berechnet, es könnte jedoch auch jeweils immer die Anfangsposition und die zumindest eine virtuelle Endposition anstatt eines Bremsvektors verwendet werden. Damit kann die Einhüllende also aus der virtuellen Teilbewegung ermittelt werden und diese vorteilhafterweise exakt umfassen.

Die Einhüllende kann somit vorteilhafterweise auf ein erstes Rechteck, das einem die Bremsvektoren, bzw. Anfangsposition und virtuelle Endpositionen, minimal umgebendes Rechteck, dessen Seiten vorzugsweise parallel zum Kinematikkoordinatensystem sind, entspricht, berechnet werden. Die Einhüllende kann analog auch auf einen ersten Quader, der einen die Bremsvektoren, bzw. Anfangsposition und virtuelle Endpositionen, minimal umgebenden Quader, dessen Seiten parallel zum Kinematikkoordinatensystem sind, darstellt, berechnet werden, was für eine Betrachtung der Kinematik im dreidimensionalen Raum vorteilhaft sein kann.

Damit umfasst der minimal umgebende Quader bzw. das minimal umgebende Rechteck jedoch nur die Bremsvektoren, bzw. Anfangsposition und virtuelle Endpositionen, die wie erwähnt bei Verwendung von Drehgelenksachsen von den virtuelle Teilbewegungen abweichen können.

Das erste Rechteck, bzw. der erste Quader, kann somit um einen, vorzugsweise richtungsunabhängigen, Korrekturwert, der zumindest die Abweichung der Bremsvektoren von den virtuellen Teilbewegungen des Punktes von der Anfangsposition in die jeweiligen virtuellen Endpositionen berücksichtigt, auf ein erweitertes erstes Rechteck, bzw. einen ersten erweiterten ersten Quader, erweitert werden. Die Einhüllende wird weiters ebenso auf das erweiterte erste Rechteck, bzw. den ersten erweiterten ersten Quader, erweitert. Durch die Verwendung des Korrekturwerts können Drehgelenksachsen berücksichtigt werden, indem erst die zugehörigen Bremsvektoren (die bekanntermaßen um einen Kreissektor von den virtuelle Teilbewegungen abweichen) zur Bildung des ersten Rechtecks herangezogen werden. In weiterer Folge können vorteilhafterweise die Abweichungen der virtuelle Teilbewegungen von den Bremsvektoren in Form der Höhe der jeweiligen Kreissektoren zur Länge und Breite des Rechtecks hinzugefügt werden um dieses auf ein erweitertes erstes Rechteck zu erweitern. Der Korrekturwert kann auch richtungsunabhängige Bremsweganteile, vorzugsweise Positionstoleranzen der Einzelachsen berücksichtigen. Der Korrekturwert kann auch richtungsunabhängige Bremsweganteile, welche aus zu erwartende Abweichungen zwischen berechneten und realen Position resultieren, berücksichtigen. Diese erwartete Abweichung kann sich wiederum durch bekannte Fehlerreaktionszeiten, Differenzenquotienten, Diskretisierungsfehler, Extrapolationsungenauigkeiten, Rechenungenauigkeiten, Geber- und/oder Kopplungsauflösungen, Offsetfehler, mechanische Verformungen, etc. ergeben

Weiters kann in einem Arbeitsraum mit einem Arbeitsraumkoordinatensystem ein Sicherheitsbereich der Kinematik mittels der Einhüllenden erweitert und/oder ein Arbeitsbereich der Kinematik mittels der Einhüllenden verringert werden, woraufhin ein modifizierter Sicherheitsbereich bzw. ein modifizierter Arbeitsbereich erzeugt wird.

Es kann jedoch auch das erste Rechteck, bzw. der erste Quader um einen Korrekturwert, der zumindest die Abweichung der Bremsvektoren von den virtuellen Teilbewegungen des Punkt von der Anfangsposition in die jeweiligen virtuellen Endpositionen berücksichtigt, auf ein erweitertes erstes Rechteck, bzw. einen ersten erweiterten Quader, erweitert werden, wobei in einem Arbeitsraum mit einem Arbeitsraumkoordinatensystem ein Sicherheitsbereich der Kinematik und/oder ein Arbeitsbereich der Kinematik vorhanden ist, die Einhüllende auf ein zweites erweitertes Rechteck, bzw. einen zweiten erweiterten Quader, dessen Seiten die Ecken des ersten erweiterten Rechtecks, bzw. des ersten erweiterten Quaders, berühren und parallel zum Arbeitsraumkoordinatensystem liegen, erweitert werden und ein Sicherheitsbereich der Kinematik mittels der Einhüllenden erweitert und/oder ein Arbeitsbereich der Kinematik mittels der Einhüllenden verringert werden, woraufhin ein modifizierter Sicherheitsbereich bzw. ein modifizierter Arbeitsbereich erzeugt wird. Die Anpassung des Arbeitsbereichs auf den verringerten Arbeitsbereich bzw. des Sicherheitsbereichs auf den erweiterten Schutzbereich unter Verwendung der Einhüllenden kann auf geeignete Weise erfolgen.

Die Anfangsposition des Punkts kann vorteilhafterweise entlang der Grenzen des Sicherheitsbereichs bzw. des Arbeitsbereichs bewegt werden und der modifizierte Sicherheitsbereich durch die Summenmenge aus Sicherheitsbereich und Einhüllender gebildet werden bzw. der modifizierte Arbeitsbereich durch die Differenz von Arbeitsbereich und Einhüllender gebildet werden. Es wird also die Einhüllende auf den zu überwachenden Arbeitsraum (erlaubter Arbeitsbereich oder verbotener Sicherheitsbereich) angewendet. Dabei wird der Arbeitsraum vergrößert (im Falle des Sicherheitsbereichs) oder verkleinert (im Falle des Arbeitsbereichs). Dabei müssen keine Schnittpunkte zweier dreidimensionaler geometrischer Körper berechnet werden, sondern lediglich der Schnittpunkt eines Punkts (Kinematikobjekt) oder einer Linie (Einzelachse) mit einem null- ein-, zwei, oder dreidimensionalen Arbeitsbereich. Es wird also nicht die Kinematik selbst modifiziert, weshalb ein Kinematikobjekt nicht als zweidimensionales oder dreidimensionales Objekt behandelt werden muss.

Der modifizierte Sicherheitsbereich bzw. der modifizierte Arbeitsbereich kann zudem überwacht werden und eine Aktion ausgeführt werden, sobald der Punkt den modifizierten Sicherheitsbereich betritt bzw. der Punkt den modifizierten Arbeitsbereich verlässt. Als Aktion kann eine Abschaltung der Kinematik, Ausgabe eines Warnsignals, etc. dienen.

Das erfindungsgemäße Verfahren kann natürlich für mehrere Punkte der Kinematik angewendet werden, vorteilhafterweise für zumindest einen Punkt pro Einzelachse. So können für jeden Punkt jeweils Bremsvektoren und daraus Einhüllende ermittelt werden. Damit können für jeden Punkt zugehörige Arbeitsbereiche bzw. Sicherheitsbereiche modifiziert werden.

Die gegenständliche Erfindung wird nachfolgend unter Bezugnahme auf die Figuren 1 bis 6c näher erläutert, die beispielhaft, schematisch und nicht einschränkend vorteilhafte Ausgestaltungen der Erfindung zeigen. Dabei zeigt
Fig.1 eine aus drei Einzelachsen gebildete Kinematik,
Fig.2a-h die Einzelachsen in der Anfangsstellung und in den Endstellungen,
Fig.3 Bremsvektoren eines Punkts,
Fig.4a, b eine virtuelle Teilbewegung des Punktes in Form eines Kreisbogens,
Fig.5a eine auf ein erstes Rechteck erweiterte Einhüllende,
Fig.5b eine mittels eines Korrekturwerts erweiterte Einhüllende,
Fig.6a eine in einen Arbeitsraum transformierte Einhüllende,
Fig.6b einen modifizierten Sicherheitsbereich,
Fig.6c einen modifizierten Arbeitsbereich.

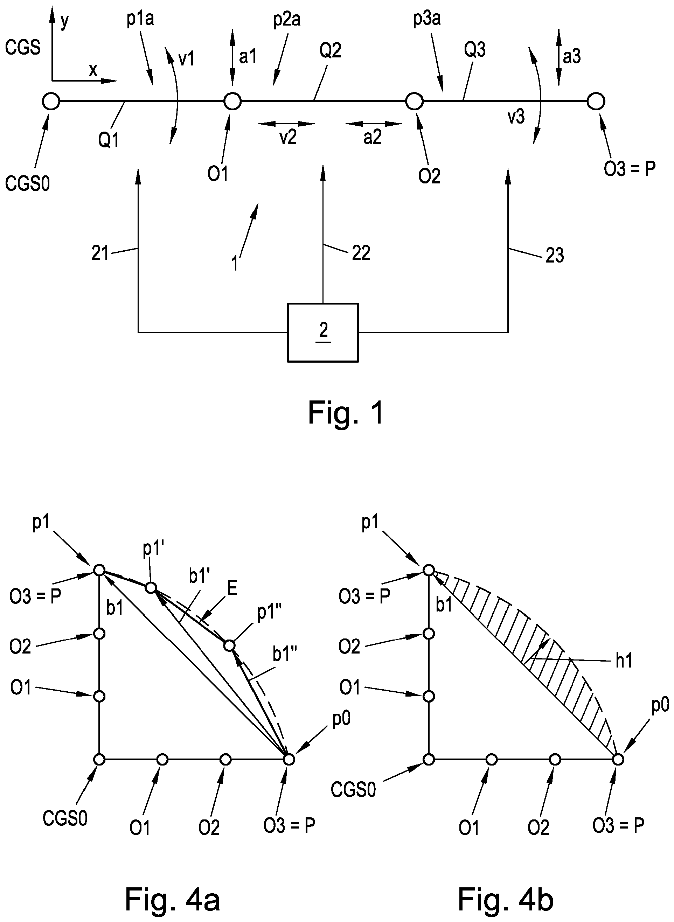

In Fig.1 ist ein als eindimensional modellierter Teil eines Roboterarms als Teil einer Kinematik 1, hier einer seriellen Kinematik, dargestellt. Es wird zur Modellierung der Kinematik 1 hier eine vereinfachte Form eines Drahtgittermodells (wire frame model) verwendet. Im Beispiel nach Fig.1 wird die Kinematik 1 durch drei punktförmige Kinematikobjekte O1, O2, O3 in einem Kinematikkoordinatensystem CGS modelliert, wobei das erste Kinematikobjekt O1 und das zweite Kinematikobjekt O2 jeweils Gelenknaben des Roboterarms darstellen. Drei Einzelachsen Q1, Q2, Q3 der Kinematik 1 bilden eine kinematische Kette und verbinden die Kinematikobjekte O1, O2, O3 mit einem Ursprung CGSO des Kinematikkoordinatensystems CGS entlang der kinematischen Kette. Das dritte Kinematikobjekt O3 könnte beispielsweise einen Anschlusspunkt für eine weitere Einzelachse darstellen.

In Fig.1 verbindet die erste Einzelachse Q1 den Ursprung CGSO mit dem ersten Kinematikobjekt O1, die zweite Einzelachse Q2 das erste Kinematikobjekt O1 mit dem zweiten Kinematikobjekt O2 und die dritte Einzelachse Q3 das zweite Kinematikobjekt O2 mit dem dritten Kinematikobjekt O3. Eine Steuereinheit 2 (Hardware und/oder Software) sorgt über Steuerleitungen 21, 22, 23 für die Bewegungen der Einzelachsen Q1, Q2, Q3, welche grundlegend als Drehgelenksachsen oder Schubgelenksachsen ausgestaltet sein können. Dabei können sich die Einzelachsen Q1, Q2, Q3 relativ zum Ursprung CGSO bewegen. Im gegenständlichen Ausführungsbeispiel stellen die erste Einzelachse Q1 und die dritte Einzelachse Q3 Drehgelenksachsen dar, was durch die zur Einzelachse Q1, Q3 querliegenden Pfeile symbolisiert wird. Da sich das erste Kinematikobjekt O1 relativ mit der ersten Einzelachse Q1 bewegt, wird das erste Kinematikobjekt O1 bei Bewegung der ersten Einzelachse Q1 in Relation zum Ursprung CGSO entlang einer Kreisbahn, bzw. eines Kreisbogens geschwenkt. Die erste Einzelachse Q1 überstreicht dabei einen Kreis, bzw. einen Kreissektor. Analog kann anhand der dritten Einzelachse Q3 das damit verbundene dritte Kinematikobjekt O3 entlang eines Kreisbogens in Relation zum zweiten Kinematikobjekt O2 geschwenkt werden, während sich die dritte Einzelachse Q3 hinsichtlich des zweiten Kinematikobjekts O2 entlang eines Kreissektors bewegt. Die möglichen Bewegungen der als Drehgelenksachse ausgeführten Einzelachsen Q1, Q3 sind üblicherweise auf einen Aktionsbereich eingeschränkt und können sich daher jeweils entlang eines Kreissektors bewegen. Gibt es keine Einschränkung auf einen Aktionsbereich, beispielsweise falls bei einem Bremsvorgang langsam verzögert wird und/oder die Geschwindigkeit v1, v2, v3 sehr hoch ist, so würde eine Drehgelenksachse einen kompletten Kreis überschreiten.

Die zweite Einzelachse Q2 ist als Schubgelenksachse ausgeführt, was durch den zur zweiten Einzelachse Q2 parallelen Doppelpfeil symbolisiert wird, und ermöglicht es das zweite Kinematikobjekt O2 in Relation zum ersten Kinematikobjekt O1 entlang einer Geraden, über die die Schubgelenksachse aus- und einfahren kann, zu bewegen.

Da die Kinematik 1 eine kinematische Kette bildet, können die Bewegungen von Einzelachsen Q1, Q2, Q3 natürlich auch die Stellung von damit verbundenen Einzelachsen Q1, Q2, Q3 verändern. So bewirkt eine Rotation der ersten Einzelachse Q1 natürlich auch eine Rotation der zweiten Einzelachse Q2 und der dritten Einzelachse Q3, etc. Dabei ist der Ursprung CGSO als fixiert angenommen und beschreibt somit die Position einer beweglich gelagerten Gelenknabe, wodurch eine Bewegung der ersten Einzelachse Q1 und der nachfolgend angekoppelten zweiten und dritten Einzelachse Q2, Q3 ermöglicht wird.

Zu einem Bremszeitpunkt wird ein Bremsvorgang eingeleitet, wobei sich die Einzelachsen Q1, Q2, Q3 weiterbewegen, bis sie zum Stillstand kommen. Die Einzelachsen Q1, Q2, Q3 befinden sich zum Bremszeitpunkt jeweils an bekannten Anfangsstellungen p1a, p2a, p3a und bewegen sich jeweils mit einer bekannten Geschwindigkeit v1, v2, v3, wobei für Drehgelenksachsen als Geschwindigkeit natürlich eine Winkelgeschwindigkeit angenommen wird.

Wird der Bremsvorgang zum Bremszeitpunkt eingeleitet, so bewegt sich die erste Einzelachse Q1 von einer ersten Anfangsstellung p1a in eine erste Endstellung p1e, die zweite Einzelachse Q2 von einer zweiten Anfangsstellung p2a in eine zweite Endstellung p2e und die dritte Einzelachse Q3 von einer dritten Anfangsstellung p3a in eine dritte Endstellung p3e, wobei jeweils eine vorgegebene oder berechnete minimale Verzögerung a1, a2, a3 gegen die jeweilige Geschwindigkeit v1, v2, v3 wirkt, wobei unter der Geschwindigkeit v1, v2, v3 natürlich die Anfangsgeschwindigkeit zu Beginn des Bremsvorgangs verstanden wird. Bei Einwirken der jeweiligen Verzögerung a1, a2, a3 verringert sich die zughörige Geschwindigkeit v1, v2, v3 während des Bremsvorgangs natürlich. Die Verzögerungen a1, a2, a3 resultieren u.a. aus der Massenträgheit der Einzelachsen Q1, Q2, Q3 und einer Bremswirkung, die von der Kinematik 1 aufgebracht werden kann, und kann vorab bekannt sein oder zum Bremszeitpunkt bestimmt werden.

Durch die minimalen Verzögerungen a1, a2, a3 ergeben sich für die Einzelachsen Q1, Q2, Q3 als Endstellungen p1e, p2e, p3e jeweils die maximalen Endstellungen, an welchen diese während eines Bremsvorgangs garantiert zum Stillstand kommen. Die Einzelachsen Q1, Q2, Q3 könnten beim tatsächlichen Bremsvorgang natürlich auch schneller, als mit der minimalen Verzögerung a1, a2, a3, theoretisch auch sofort (d.h. durch eine unendlich große Verzögerung a1, a2, a3) abgebremst werden. Für eine sofortige Abbremsung würde zum Bremszeitpunkt für die betreffende Einzelachse Q1, Q2, Q3 die Endstellungen p1e, p2e p3e mit der Anfangsstellung p1a, p2a, p3a zusammenfallen. Da bei der Ermittlung des Bremsweges jedoch die minimale Verzögerung a1, a2, a3 für die Berechnung der Endstellungen p1e, p2e, p3e verwendet wird, kann sichergestellt werden, dass die Einzelachsen Q1, Q2, Q3 bei einem tatsächlichen Bremsvorgang tatsächlich zwischen Anfangsstellung p1a, p2a, p3a und Endstellung p1e, p2e, p3e zum Stillstand kommen.

Erfindungsgemäß wird bei einem Bremsvorgang für einen mit einer Einzelachse Q1, Q2, Q3 gekoppelten Punkt P aus einer Anfangsposition p0 des Punktes P, einer vektoriellen Geschwindigkeit v1 zumindest einer Einzelachse Q1, Q2, Q3 und einer minimalen Verzögerung a1, a2, a3 zumindest einer Einzelachse Q1, Q2, Q3 zumindest eine virtuelle Endposition p1,...,p7 des Punktes P ermittelt. Es wird im gegenständlichen Ausführungsbeispiel das auf der dritten Einzelachse Q3 befindliche dritte Kinematikobjekt O3 als Punkt P betrachtet und in weiterer Folge der Bremsweg für diesen Punkt P ermittelt. Der Bremsweg entspricht dem Bereich, der während des Bremsvorgangs von den virtuellen Teilbewegungen des Punkts P überstrichen werden könnte.

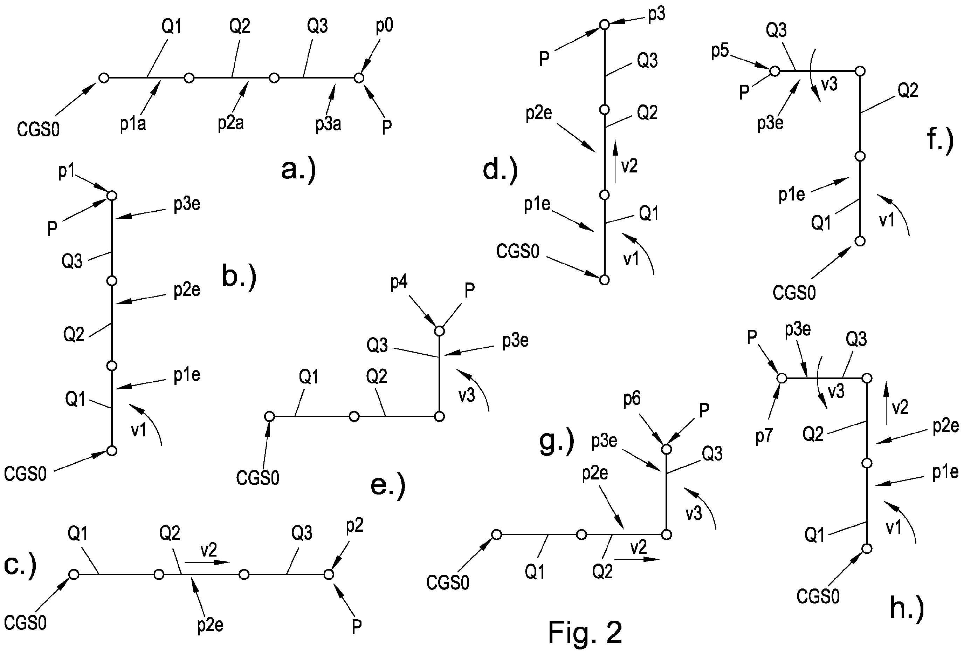

In Fig. 2a sind die Einzelachsen Q1, Q2, Q3 der in Fig. 1 dargestellten Kinematik 1 in der Anfangsstellung p1a, p2a, p3a dargestellt, wobei sich der Punkt P in einer Anfangsposition p0 befindet.

Fig. 2h zeigt die Endstellungen p1e, p2e, p3e der Einzelachsen Q1, Q2, Q3, welche alle mit der minimalen Verzögerung a1, a2, a3 abgebremst wurden, wobei sich der Punkt P in der virtuellen Endposition p7 befindet. Die möglichen, verschiedenen virtuellen Endpositionen p1,...,p7 des Punktes können jeweils durch eine Variation der Verzögerungen der Einzelachsen Q1, Q2, Q3, d.h. aller Anfangsstellungen p1a, p2a, p3a und Endstellungen p1e, p2e, p3e, gebildet werden. Es gibt dann aufgrund der möglichen Bewegungen der Einzelachsen Q1, Q2, Q3 für einen Punkt P immer (2ⁱ - 1) mögliche virtuelle Endpositionen p1,...,p7, wenn i die Anzahl der Einzelachsen Q1, Q2, Q3, über die der Punkt P mit dem Ursprung CGSO verbunden ist, beschreibt. Hier werden die virtuellen Endpositionen p1,...p7 gesamtheitlich, also in Relation zum Ursprung CGSO betrachtet. Das bedeutet für die dargestellte Ausführung nach Fig.2, bei welcher der Punkt P dem dritten Kinematikobjekt O3 entspricht, (2ⁱ - 1) = (2³ - 1)=7 mögliche virtuelle Endpositionen p1,...,p7, da der Punkt P (das dritte Kinematikobjekt O3) über i=3 Einzelachsen Q1, Q2, Q3 mit dem Ursprung verbunden ist.

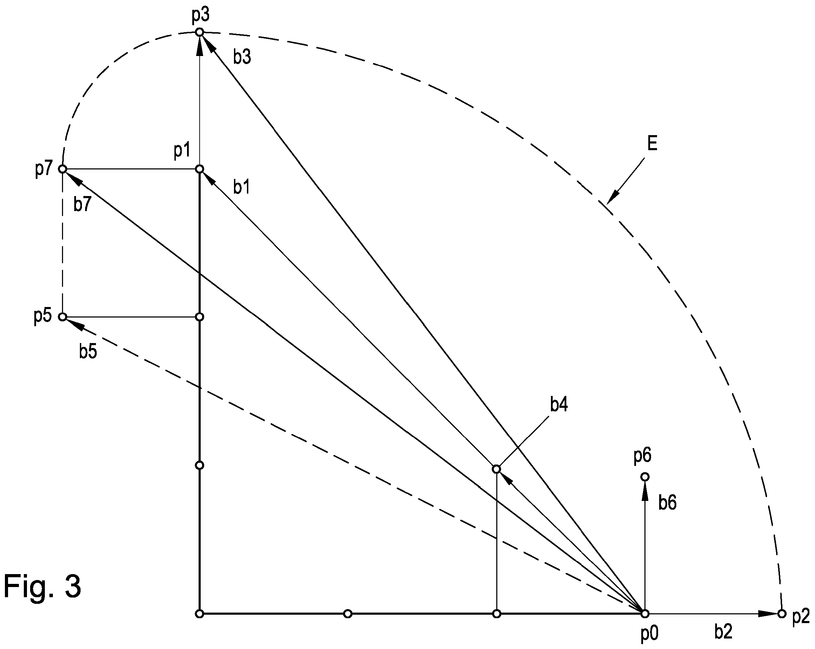

Es werden dann virtuellen Endpositionen p1,...,p7 ermittelt. Die virtuellen Endpositionen p1,...,p7 beschreiben die möglichen Endpositionen des Punkts P bei Auftreten einer minimalen Verzögerung a1, a2, a3 auf Basis einzelner Bewegungsanteile der Gesamtbewegung (z.B. nur erste und zweite Einzelachse Q1, Q2). Die Einhüllende E wird dabei aus der Anfangsposition p0 und den virtuellen Endpositionen p1,...p7 ermittelt. Es können jedoch auch (siehe Fig. 3) Bremsvektoren b1,...,b7, welche die Anfangsposition p0 mit den möglichen (im einfachsten Fall zumindest einen) virtuellen Endpositionen p1,...,p7 verbinden, ermittelt werden und die Einhüllende E unter Verwendung der Bremsvektoren b1,...,b7 ermittelt werden.

Die Bremsvektoren b1,...,b7, welche dann auch zur Ermittlung der Einhüllenden E verwendet werden (wie weiter unten beschrieben), können auch aus einer Linearkombination von Basisbremsvektoren gebildet werden, wobei jeder Basisbremsvektor einer bewegten Einzelachse Q1, Q2, Q3 zugeordnet ist. Für jeden Basisbremsvektor wird also die Annahme getroffen, dass sich die dem Basisbremsvektor nicht zugeordneten Einzelachsen Q1, Q2, Q3 nicht weiterbewegen. Es wird für einen Basisbremsvektor, analog wie für einen Bremsvektor, die zugehörige virtuelle Endposition p1, p2, p4 des Punktes P aus der Anfangsposition p0 des Punktes P, einer vektoriellen Geschwindigkeit v1, v2, v3 und der minimalen Verzögerung a1, a2, a3 nur der zugeordneten Einzelachse Q1, Q2, Q3 ermittelt. Der Basisbremsvektor verbindet dann wie ein Bremsvektor die Anfangsposition p0 des Punktes P mit dieser zugehörigen virtuelle Endposition p1, p2, p4 des Punktes P.

Die virtuelle Endpositionen p1, p2, p4 des Punkts P, die für die Ermittlung der zugehörigen Basisbremsvektoren verwendet werden können, sind in Fig. 2b, 2c, 2e skizziert. Fig. 2b zeigt beispielhaft die virtuelle Endposition p1 bei einem Abbremsen der mit der ersten Geschwindigkeit v1 bewegten ersten Einzelachse Q1 mit der minimalen Verzögerung a1 (nicht eingezeichnet), wobei für die zweite Einzelachse Q2 und die dritte Einzelachse Q3 ein sofortiger Stillstand angenommen wird, d.h. die Bewegung der zweite Einzelachse Q2 und die dritte Einzelachse Q3 nicht berücksichtigt wird. Die zweite Einzelachse Q2 und die dritte Einzelachse Q3 verbleiben also in der Anfangsstellung p2a, p3a (wie in Fig.2a). Fig. 2c wiederum zeigt die virtuelle Endposition p2 bei einem Abbremsen der mit der zweiten Geschwindigkeit v2 bewegten zweiten Einzelachse Q2 mit der minimalen Verzögerung a2 (nicht eingezeichnet), wobei für die erste Einzelachse Q1 und die dritte Einzelachse Q3 angenommen wurde, dass sie sofort zum Stillstand kommen oder diese nicht bewegt werden. Fig. 2e zeigt die virtuelle Endposition p4 bei einem Abbremsen der mit der dritten Geschwindigkeit v3 bewegten dritten Einzelachse Q3 mit der minimalen Verzögerung a3 (nicht eingezeichnet), wobei für die erste Einzelachse Q1 und die zweite Einzelachse Q2 angenommen wurde, dass sie sofort zum Stillstand kommen oder diese nicht bewegt werden.

In Fig.2d wurden die erste Einzelachse Q1 und die zweite Einzelachse Q2 (mit der nicht eingezeichneten minimalen Verzögerung a1, a2) abgebremst und für die dritte Einzelachse Q3 sofortiger Stillstand angenommen, in Fig.2f die erste Einzelachse Q1 und die dritte Einzelachse Q3 (mit der nicht eingezeichneten minimalen Verzögerung a1, a3) abgebremst und für die zweite Einzelachse Q2 sofortiger Stillstand angenommen, in Fig.2g die zweite Einzelachse Q2 und die dritte Einzelachse Q3 (mit der nicht eingezeichneten minimalen Verzögerung a2, a3) abgebremst und für die erste Einzelachse Q1 sofortiger Stillstand angenommen. Fig.2h offenbart wie erwähnt ein Abbremsen der ersten Einzelachse Q1, der zweiten Einzelachse Q2 und der dritten Einzelachse Q3, jeweils mit der (nicht eingezeichneten) minimalen Verzögerung a1, a2, a3.Die in den Fig. 2d, 2f, 2g, 2h dargestellten virtuellen Endpositionen p3, p5, p6, p7 des Punkts P können somit auch als Linearkombinationen der in Fig. 2b, 2c, 2e dargestellten virtuellen Endpositionen p1, p2, p4 des Punkts P dargestellt werden.

Die Geschwindigkeiten v1, v2, v3 treten in Fig.2 natürlich nur zu Beginn des Bremsvorgangs auf, da sie danach um die Verzögerung a1, a2, a3 verzögert werden. Sind in Fig.2 keine Geschwindigkeiten v1, v2, v3 eingezeichnet, bedeutet das lediglich, dass angenommen wird, dass die zugehörige Einzelachse Q1, Q2, Q3 sofort abgebremst wird, und nicht, dass sie sich bis zum Bremszeitpunkt nicht bewegen.

Es werden somit alle möglichen virtuellen Endpositionen p1,...p7 des Punkts P der Kinematik 1 bei einer Abbremsung ermittelt. Dazu wird ausgehend von den Anfangsstellungen p1a, p2a, p3a der Einzelachsen Q1, Q2, Q3 ausgegangen und die Einzelachsen Q1, Q2, Q3 jeweils, vorzugsweise minimal, verzögert, womit sie die Endstellungen p1e, p2e, p3e erreichen. Dabei ergeben sich durch eine Variation der Endstellungen p1e, p2e, p3e die virtuellen Endpositionen p1,...p7 des Punkts P. Da die virtuellen Endpositionen p1,...,p7 aus vektoriellen Geschwindigkeiten v1, v2, v3 und Verzögerungen a1, a2, a3 der Einzelachsen Q1, Q2, Q3 ermittelt werden, wird nicht nur die Position, sondern auch die Bewegungsrichtung der Einzelachsen Q1, Q2, Q3 während des Bremsvorgangs berücksichtigt.

In Fig. 3 sind somit die in Fig. 2a dargestellte Anfangsposition p0 des Punkts P und die in Fig. 2b-2h dargestellten möglichen virtuellen Endpositionen p1,...,p7 des Punkts P zusammengefasst dargestellt, wobei auch die sich ergebenden Bremsvektoren b1,...,b7 für den Punkt P dargestellt sind. Die Bremsvektoren b1,...,b7 verbinden also die Anfangsposition p0 mit den ermittelten virtuellen Endpositionen p1,...,p7 des Punkts P.

Im dargestellten Ausführungsbeispiel werden Bremsvektoren b1,...,b7 für die Ermittlung der Einhüllenden E verwendet. Eine Berechnung der Einhüllenden E wäre natürlich auch möglich, wenn direkt die Anfangsposition p0 und die zumindest eine virtuelle Endpositionen p1,...,p7 verwendet werden ohne die Bremsvektoren b1,...,b7 zu ermitteln.

Die Bremsvektoren b1,...,b7 können, wie erwähnt, als Linearkombinationen der zugehörigen Basisbremsvektoren bestimmt werden. In Fig.3 wäre b1 ein Basisbremsvektor für die erste Einzelachse Q1, b2 ein Basisbremsvektor für die zweite Einzelachse Q2 und b4 ein Basisbremsvektor für die dritte Einzelachse Q3, siehe hierzu Fig.2.

Wird ein Bremsvektor b1,...,b7 durch eine virtuelle Endposition p1,...,p7 gebildet, der nur durch ein Ausfahren einer Schubgelenksachse entsteht (in Fig. 3 beispielsweise der (Basis)Bremsvektor b2), so entspricht der jeweilige Bremsvektor b1,...,b7 (hier der Bremsvektor b2) als gerade Verbindung zwischen Anfangsposition p0 und virtueller Endposition (hier p2) der tatsächlichen Trajektorie des Punkt P bei der Bremsbewegung, wenn die zweite Einzelachse Q2 mit der zweiten minimalen Verzögerung a2 verzögert wird und die erste und dritte Einzelachsen Q1, Q3 nicht bewegt werden. Bei einer Drehgelenksachse ergibt sich als virtuelle Teilbewegung bei Bewegung der damit verbundenen Einzelachse natürlich ein Kreisbogen. Wie erwähnt ist die tatsächliche Trajektorie des Punktes P unbekannt. Die virtuellen Teilbewegungen des Punktes P hingegen werden auf Basis einzelner Bewegungen der Einzelachsen Q1, Q2, Q3 Gelenksbewegungen oder einer Kombination von Bewegungen unter Wirken der minimalen Verzögerung a1, a2, a3 bei einer Anfangsgeschwindigkeit v1, v2, v3 ermittelt.

Der Bremsbereich des Punkts P wird erfindungsgemäß mittels einer Einhüllenden E bestimmt. Die Einhüllende E ist ein eindimensionales (z.B. bei Bewegung nur einer Schubgelenksachse), zweidimensionales oder dreidimensionales Objekt, welches die ermittelten Bremsvektoren b1,...,b7 umfasst und deren Ausdehnung aus den Bremsvektoren b1,...,b7 berechnet wird. In der einfachsten Konstellation kann die Einhüllende E also genau die Schar an Bremsvektoren b1,...,b7 umfassen, womit die Ausdehnung der Einhüllenden E minimiert wird. Dies ist jedoch nur sinnvoll, wenn sich die virtuellen Teilbewegungen nicht außerhalb der Bremsvektoren b1,...,b7 befinden, wie dies z.B. bei Schubgelenksachsen der Fall ist. Es könnte die Einhüllende E auch als kleinstes umgebenes Objekt der Schar an möglichen virtuellen Teilbewegungen gebildet werden. Die virtuellen Teilbewegungen sind aber meist unbekannt, könnten aber, meist unter großem Rechenaufwand, aus den Bremsvektoren berechnet werden.

Es reicht meist nicht aus lediglich die Anfangsposition p0 und virtuellen Endpositionen p1,...,p7 mittels Bremsvektoren b1,...,b7 in Beziehung zu setzen, da wie erwähnt die virtuelle Teilbewegung meist von den Bremsvektoren b1,...,b7 abweichen.

Die virtuellen Teilbewegungen können auch durch Zwischenpositionen des Punkts P zwischen den jeweiligen virtuellen Endpositionen p1,...,p7 ermittelt werden, indem beispielsweise die virtuellen Endpositionen p1,...,p7 ebenso mit Vektoren verbunden werden und daraus die Einhüllende E berechnet wird. Eine mögliche Einhüllende E, die die virtuellen Teilbewegungen umfasst, ist in Fig. 3 strichliert dargestellt.

Eine virtuelle Teilbewegung des Punkts P weicht von den jeweiligen (Basis)Bremsvektoren b1,...,b7, welche durch Schwenken einer Drehgelenksachse gebildet werden, ab. Eine beispielhafte virtuelle Teilbewegung des Punkts P, d.h. des Kinematikobjekts O3, die aufgrund einer Drehung nur der ersten Einzelachse Q1 einen Kreisbogen beschreibt, ist in Fig.4a und Fig. 4b dargestellt. Wie zu sehen ist, verbindet der Bremsvektor b1 (ein Basisbremsvektor, da nur die erste Einzelachse Q1 bewegt wurde) die Anfangsposition p0 mit der virtuellen Endposition p1.

Es kann wie in Fig. 4a dargestellt für den Punkt P aus einer Anfangsposition p0 des Punktes P, einer vektoriellen Geschwindigkeit v1 zumindest einer Einzelachse Q1, Q2, Q3 und einer weiteren Verzögerung a1', a1", größer der minimalen Verzögerung a1, a2, a3 zumindest einer Einzelachse Q1, Q2, Q3 zumindest eine virtuelle Endposition p1',p1" des Punktes P ermittelt werden. Hier wird eine erste weitere Endposition p1', die sich aus einer ersten weiteren Verzögerung a1' ergibt, sowie zweite weitere Endposition p1", die sich aus einer zweiten weiteren Verzögerung a1" ergibt, berücksichtigt. Es wird ein erster weiterer Bremsvektor b1', welcher die Anfangsposition p0 mit der ersten weiteren virtuellen Endposition p1' verbindet, und ein zweiter weiterer Bremsvektor b1", welcher die Anfangsposition p0 mit der zweiten weiteren virtuellen Endposition p1" verbindet, ermittelt. Die Ausdehnung der Einhüllenden E kann aus dem ersten Bremsvektor b1, dem ersten und zweiten weiteren Bremsvektor b1', b1" berechnet werden, bzw. angenähert werden. Natürlich kann die Ausdehnung der Einhüllenden E auch aus der Anfangsposition p0, der zumindest einen Endposition p1 und der zumindest einen virtuelle Endposition p1',p1" berechnet werden, ohne den Bremsvektor b1 oder den zumindest einen weiteren Bremsvektor b1', b1" zu berechnen.

Es wird also in diesem Fall nicht nur die minimale Verzögerung a1, a2, a3 berücksichtigt, sondern auch weitere Verzögerungen a1', a1", die größer der minimalen Verzögerung a1 sind. Je mehr weitere Verzögerungen a1', a1" und damit je mehr weitere Bremsvektoren b1', b1 "ermittelt werden, desto genauer kann die virtuelle Teilbewegung durch die weiteren Endpositionen p1', p1", bzw. die weiteren Bremsvektoren b1', b1" angenähert werden. Bei einer Berechnung unendlich vieler weiterer Bremsvektoren b1', b1" durch unendlich viele infinitesimal kleine Inkremente der weiteren Verzögerung a1', a1", reichend von der minimalen Verzögerung a1 bis zu einer unendlichen Verzögerung wird die virtuelle Teilbewegung genau angenähert. Werden weniger weitere Bremsvektoren b1', b1" berechnet, so muss die noch vorhandene Abweichung der Endpositionen p1', p1" von der virtuellen Teilbewegung bei Ermittlung der Einhüllenden E berücksichtigt werden, beispielsweise um eine zusätzliche geeignete Erweiterung der Ausdehnung der Einhüllenden E, analog zur Anwendung des, vorzugsweise richtungsunabhängigen, Korrekturwerts h, welcher weiter unten in Verbindung mit dem ersten Rechteck R1 beschrieben wird.

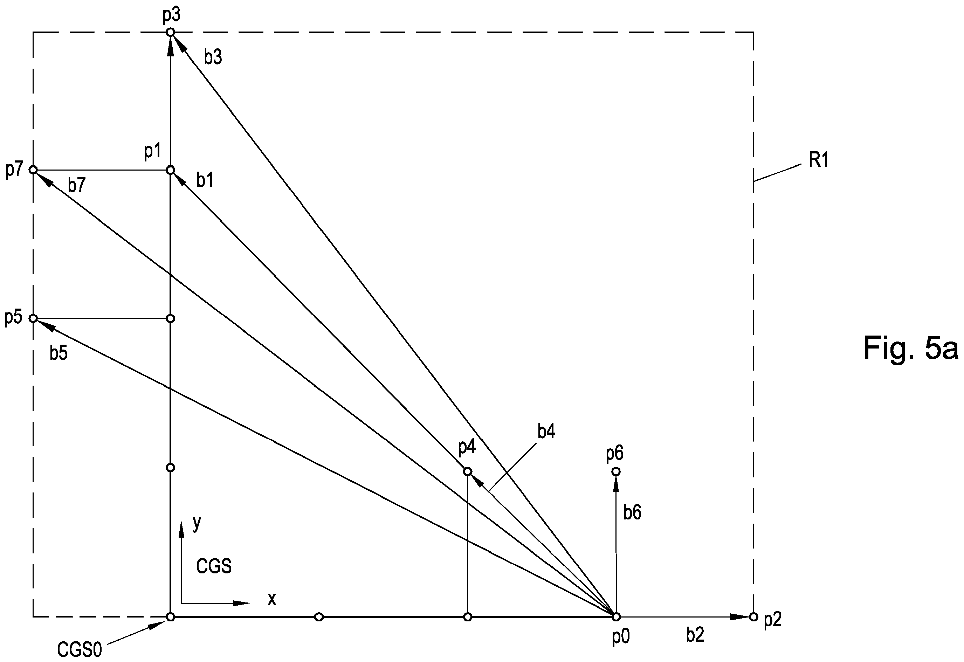

Die Einhüllende E kann aber auch vorteilhafterweise aus den Bremsvektoren b1,...,b7, bzw. Anfangsposition p0 und virtuellen Endpositionen p1,...,p7, berechnet werden, indem die Einhüllende E als ein erstes Rechteck R1, das ein die Bremsvektoren b1,...,b7 minimal umgebendes Rechteck, dessen Seiten parallel zum Kinematikkoordinatensystem CGS sind, darstellt, berechnet wird, wie in Fig. 5a dargestellt.

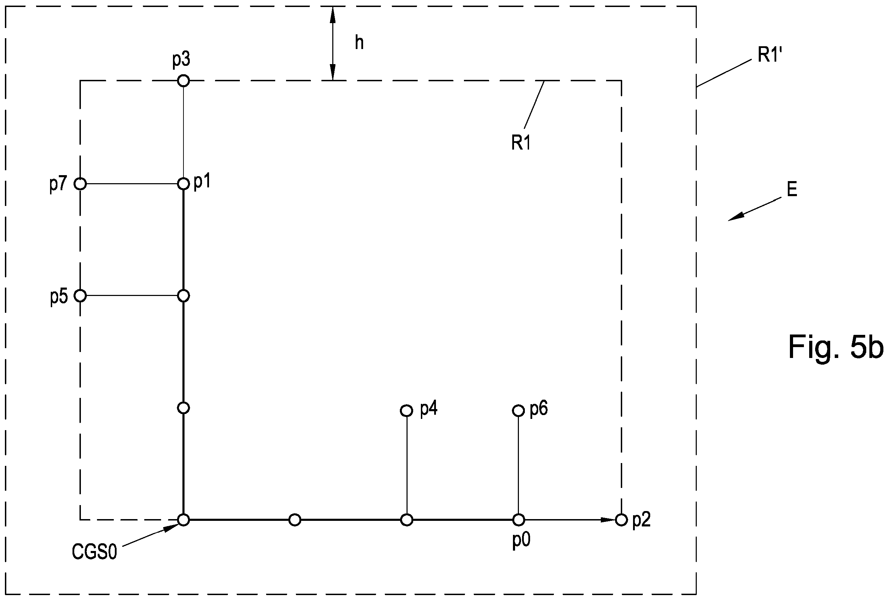

Das erste Rechteck R1 als Einhüllende E wird jedoch vorzugsweise um einen Korrekturwert h, der zumindest eine Abweichung der Bremsvektoren b1,...,b7 von den virtuellen Teilbewegungen des Punkts P von der Anfangsposition p0 in die jeweiligen virtuellen Endpositionen p1,...,p7 berücksichtigt, auf ein erweitertes erstes Rechteck R1' als Einhüllende E erweitert (Fig.5b).

Wie in Fig. 4b ersichtlich ist, weicht der Bremsvektor b1 von der strichliert eingezeichneten virtuellen Teilbewegung um ein schraffiert eingezeichnetes Kreissegment mit der Kreissegmenthöhe h1 ab. Somit kann der obige Korrekturwert h als Summe aller Kreissegmenthöhen h1 ermittelt werden. Die Kreissegmenthöhen h1 beschreiben jeweils die Abweichung von Drehgelenksachsen zugeordneten Basisbremsvektoren b1,...,b7 hinsichtlich der jeweiligen kreisbogenartigen virtuelle Teilbewegung. Für die dargestellte Kinematik 1 müsste somit auch die Kreissegmenthöhe, welche die Abweichung des vierten Basisbremsvektors b4 von der zugehörigen virtuellen Teilbewegung beschreibt, berücksichtigt werden.

Für die Ermittlung der jeweiligen Kreissegmenthöhen h1 können beispielsweise bekannte geometrische, bzw. trigonometrische Verfahren (Sinussatz, etc.) verwendet werden, wobei die Anfangsposition p0 und virtuelle Endposition p1,...,p7, sowie Achslängen, Abstände zum Ursprung CGSO, etc. herangezogen werden können. Selbstverständlich kann die Einhüllende unter Verwendung der weiteren Verzögerungen a1', a1", sowie eines ersten Rechtecks R1, das ein die Bremsvektoren b1,...,b7 minimal umgebendes Rechteck R1 umfasst und/oder und ein um den Korrekturwert h erweitertes Rechteck R1' ermittelt werden.

Fig.5b zeigt eine Einhüllende E, die ein um einen Korrekturwert h (beispielsweise als Summe der Kreissegmenthöhen h1) erweitertes erstes Rechteck R1' darstellt. Die Positionen der Kinematikobjekte O1, O2, O3 sind in Fig.5a und Fig. 5b nur angedeutet.

Es wäre natürlich auch möglich lediglich ein minimal umgebendes Rechteck R1 für die virtuelle Teilbewegung des Punkts P zu berechnen. Die virtuellen Teilbewegungen selbst sind jedoch, wie erwähnt, schwieriger zu berechnen, als die Bremsvektoren samt zugehörigen Kreissegmenthöhen.

Es können für die Einzelachsen Q1, Q2, Q3 auch richtungsunabhängige Bremsweganteile bestimmt werden, die eine Bewegung der Einzelachsen Q1, Q2, Q3 in alle Raumrichtungen bewirken können. Richtungsunabhängige Bremsweganteile können beispielsweise durch eine Positionstoleranz, welche eine Positionsabweichung eines ermittelten Bremsvektors b1,...,b7 zur tatsächlichen Position des Punkts P beschreibt, entstehen. Da die Einhüllende E alle Bremsvektoren b1,...,b7 der Kinematik 1 umschließt, kann durch die Berücksichtigung der richtungsunabhängigen Bremsweganteile abermals die Einhüllende E, bzw. das erste Rechteck R1 erweitert werden, beispielsweise indem der Korrekturwert h weiter angepasst wird.

Die Einhüllende E kann in ein Arbeitsraumkoordinatensystem WCS, in welchem sich ein Arbeitsraum W mit einem Sicherheitsbereich SS der Kinematik 1 und/oder ein Arbeitsbereich WS der Kinematik 1 befindet, transformiert werden. Arbeitsraum W, bzw. Sicherheitsbereich SS und/oder Arbeitsbereich WS können vorteilhafterweise nur einem Punkt P zugehörig sein, wobei für weitere Punkte P jeweils mehrere zugeordnete Arbeitsräume W, bzw. Sicherheitsbereiche SS und/oder Arbeitsbereiche WS vorhanden sein können. Es könnte alternativ auch ein Bremsbereich aus mehreren Punkten P zusammengesetzt werden und in weiterer Folge ein Arbeitsraum W, bzw. Sicherheitsbereich SS und/oder Arbeitsbereich WS für mehrere Punkte P berechnet werden. Dies ist jedoch weitaus konservativer und kann auch rechenaufwändiger sein. Normalerweise wird für jeden interessanten Punkt P der Bremsbereich ermittelt und WS/SS angepasst. Für jeden Punkt gibt es somit andere WS/SS.

Alternativ könnte man auch die einzelnen Bremsbereiche zu einem einzigen "worst case Bremsbereich" zusammenfassen und die WS/SS nur einmal anpassen. Es werden dann die Punkte P mit identischen WS/SS geprüft. Ist einfacher, aber konservativer.

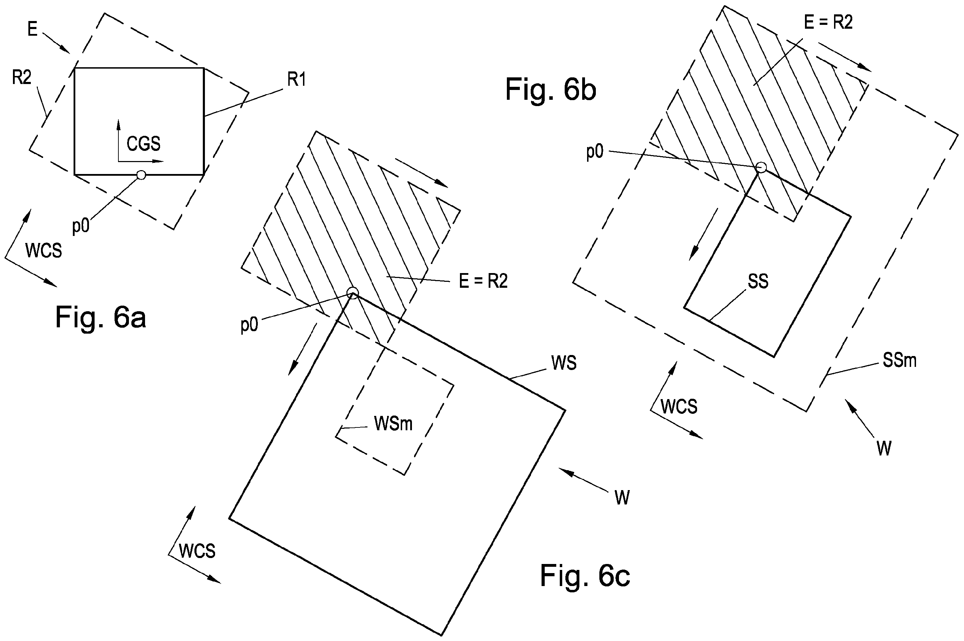

Es kann im Arbeitsraum W der Sicherheitsbereich SS der Kinematik 1 mittels der Einhüllenden E erweitert und/oder der Arbeitsbereich WS der Kinematik 1 mittels der Einhüllenden E verringert werden, woraufhin ein modifizierter Sicherheitsbereich SSm bzw. ein modifizierter Arbeitsbereich WSm erzeugt wird. Die Einhüllende E kann auf ein zweites Rechteck R2, dessen Seiten die Ecken des ersten Rechtecks R1 berühren und parallel zum Arbeitsraumkoordinatensystem WCS liegen, erweitert werden, wie in Fig. 6a dargestellt. Es könnte natürlich auch das erste Rechteck R1 unter Verwendung des Korrekturwerts h auf ein erstes erweitertes Rechteck R1' erweitert werden und das erste erweiterte Rechteck R1' zur Ermittlung des zweiten Rechtecks R2 verwendet werden.

Die Modifikation des Sicherheitsbereichs kann erfolgen, indem die betrachtete Anfangsposition p0 des Punkts P entlang der Grenzen des Sicherheitsbereichs SS bewegt wird und der modifizierte Sicherheitsbereich SSm durch die Summenmenge aus Sicherheitsbereich SS und Einhüllender E gebildet wird, wie in Fig. 6b dargestellt. Es wird also der Sicherheitsbereich SS um die anhand des Punkts P verschobene Einhüllende E erweitert, womit der Sicherheitsbereich SS auf den modifizierten Sicherheitsbereich SSm vergrößert wird.

Der modifizierte Arbeitsbereich WSm kann analog durch die Differenz von Arbeitsbereich WS und Einhüllender E gebildet werden, wie in Fig. 6c dargestellt. Dabei wird der Arbeitsbereich WS um die anhand des Punkts P verschobene Einhüllende E verringert, womit der Arbeitsbereich WS auf den modifizierten Arbeitsbereich WSm verkleinert wird.

Zusammengefasst werden für einen Punkt P, vorzugweise ein modelliertes Kinematikobjekt O1, O2, O3, einer Kinematik 1 die maximalen virtuelle Endpositionen p1,...,p7 bei einer (minimalen) Verzögerung a ermittelt. Weiter wird eine Einhüllende E, welche Anfangsposition p0 und virtuelle Endpositionen p1,...,p7 umschließt, berechnet. Es können auch Bremsvektoren b1,...,b7, welche die Anfangsposition p0 mit den jeweiligen virtuellen Endpositionen p1,...,p7 verbinden, gebildet werden und eine die Bremsvektoren b1,...,b7 umschließende Einhüllende E aus den Bremsvektoren b1,...,b7 berechnet werden. Es kann ein erstes Rechteck R1, das die Bremsvektoren b1,...,b7, bzw. Anfangsposition und virtuelle Endpositionen p1,...,p7, umfasst, gebildet und gegebenenfalls um einen Korrekturwert h erweitert werden. Der Korrekturwert h kann die Abweichung der Bremsvektoren b1,...,b7 von den virtuellen Teilbewegungen, sowie richtungsunabhängige Bremsweganteile, etc. berücksichtigen. Die Einhüllende E kann weiter in ein Arbeitsraumkoordinatensystem WCS, transformiert und für die Anpassung von Arbeitsbereichen WS bzw. Sicherheitsbereichen SS herangezogen werden.

Bei einer Kollisionsprüfung des Punkts P mit dem Sicherheitsbereich SS, beziehungsweise einer Prüfung ob der Punkt P einen Arbeitsbereich WS verlässt, muss lediglich eine Kollision eines nulldimensionalen oder eindimensionalen Objekts mit einem zwei- oder dreidimensionalen Arbeitsbereich WS bzw. Sicherheitsbereich SS betrachtet werden, was weitaus effizienter ist als eine Kollisionsprüfung zweier dreidimensionaler Objekte, wie es bei einer Überwachung einer gesamten dreidimensionalen Kinematik 1 notwendig wäre.

Die Erfindung wurde oben am Beispiel einer zweidimensionalen Kinematik erläutert. Üblicherweise ermöglicht eine Kinematik aber eine dreidimensionale Bewegung. Die erfindungsgemäße Ermittlung des Bremsbereichs eines Punkte P der Kinematik kann aber einfach auf den dreidimensionalen Fall erweitert werden. Statt der Verwendung von Rechtecken im zweidimensionalen Raum können dabei in gleicher Weise Quader im dreidimensionalen Raum zur Darstellung der Einhüllenden E verwendet werden.

Das erfindungsgemäße Verfahren kann natürlich für mehrere Punkte P der Kinematik 1 angewendet werden. Vorteilhafterweise wird zumindest ein Punkt P pro Einzelachse Q1, Q2, Q3 betrachtet, wobei weiters für jeden Punkt P erfindungsgemäß jeweils Bremsvektoren b1,...,b7, bzw. Anfangsposition und virtuelle Endpositionen p1,...,p7, daraus jeweils Einhüllende E ermittelt werden und ggf. weiter Arbeitsbereiche WS bzw. Sicherheitsbereiche SS modifiziert werden.

## Patentansprüche

1. Verfahren zur Steuerung einer Kinematik (1), die in einem Kinematikkoordinatensystem (CGS) mittels gelenkig miteinander verbundener Einzelachsen (Q1, Q2, Q3) modelliert wird, wobei zumindest eine der Einzelachsen (Q1, Q2, Q3) mit einem Ursprung (CGSO) des Kinematikkoordinatensystems (CGS) verbunden ist, sich zumindest eine der Einzelachsen (Q1, Q2, Q3) relativ zum Ursprung (CGSO) bewegt und zu einem Bremszeitpunkt ein Bremsvorgang in der modellierten Kinematik (1) eingeleitet wird, wobei beim Bremsvorgang für einen mit einer Einzelachse (Q1,Q2,Q3) gekoppelten Punkt (P) für die zumindest eine bewegte Einzelachse (Q1, Q2, Q3) eine virtuelle Endposition (p1,...,p7) des Punktes (P) ermittelt wird,
**dadurch gekennzeichnet.**
**dass** für eine Ermittlung der virtuellen Endposition (p1, ..., p7) des Punktes (P) eine Anfangsposition (p0) des Punktes (P), welche vom Punkt (P) zum Bremszeitpunkt im Kinematikkoordinatensystem (CGS) eingenommen wird, eine vektorielle Geschwindigkeit (v1) der zumindest einen bewegten Einzelachse (Q1, Q2, Q3) und eine minimale Verzögerung (a1, a2, a3) der zumindest einen bewegten Einzelachse (Q1, Q2, Q3) herangezogen werden, wobei die vektorielle Geschwindigkeit (v1) einer Anfangsgeschwindigkeit der zumindest einen bewegten Einzelachse (Q1, Q2, Q3) zum Bremszeitpunkt entspricht und einen Betrag sowie eine Richtung der Anfangsgeschwindigkeit berücksichtigt, und wobei von der minimalen Verzögerung (a1, a2, a2) der vektoriellen Geschwindigkeit (v1) der zumindest einen bewegten Einzelachse (Q1, Q2, Q3) garantiert verzögernd entgegengewirkt wird;
**und dass** ein Bremsbereich des Punkts (P) durch eine Einhüllende (E) der Anfangsposition (p0) und der für die zumindest eine bewegte Einzelachse (Q1, Q2, Q3) ermittelten, virtuellen Endposition (p1,... ,p7) bestimmt wird, wobei eine Ausdehnung der Einhüllenden (E) aus der Anfangsposition (p0) und der für die zumindest eine bewegte Einzelachse (Q1, Q2, Q3) ermittelten, virtuellen Endposition (p1,... ,p7) berechnet wird und der Bremsbereich bei der Steuerung der Kinematik (1) berücksichtigt wird.

2. Verfahren nach Anspruch 1, **dadurch gekennzeichnet, dass** die Ausdehnung der Einhüllenden (E) aus der Anfangsposition (p0), der für die zumindest eine bewegte Einzelachse (Q1, Q2, Q3) ermittelten, virtuellen Endposition (p1,... ,p7) und einer sich daraus ergebenden, virtuellen Teilbewegung berechnet wird.

3. Verfahren nach Anspruch 1 oder 2, **dadurch gekennzeichnet, dass** die zumindest eine virtuelle Endposition (p1,... ,p7) des Punktes (P) aus der Anfangsposition (p0) des Punktes (P), einer vektoriellen Geschwindigkeit (v1, v2, v3) jeder bewegten Einzelachse (Q1,Q2,Q3) und einer Verzögerung (a1, a2, a3) jeder bewegten Einzelachse (Q1, Q2, Q3) ermittelt wird.

4. Verfahren nach einem der Ansprüche 1 bis 3, **dadurch gekennzeichnet, dass** für den Punkt (P) aus der Anfangsposition (p0), der vektoriellen Geschwindigkeit (v1) der zumindest einen Einzelachse (Q1,Q2,Q3) und zumindest einer weiteren Verzögerung (a1', a") der zumindest einen Einzelachse (Q1,Q2,Q3), die größer als die minimale Verzögerung (a1, a2, a3) der zumindest einen Einzelachse (Q1,Q2,Q3) ist, zumindest eine weitere virtuelle Endposition (p1', p1") des Punktes (P) ermittelt wird, **und dass** der Bremsbereich des Punkts (P) durch eine Einhüllende (E) der Anfangsposition (p0), der virtuellen Endposition (p1,... ,p7) und der zumindest einen weiteren virtuellen Endposition (p1',p1"), bestimmt wird, wobei die Ausdehnung der Einhüllenden (E) aus der Anfangsposition (p0), der virtuellen Endposition (p1,... ,p) und der zumindest einen weiteren virtuellen Endposition (p1',p1"), berechnet wird.

5. Verfahren nach einem der Ansprüche 1 bis 4, **dadurch gekennzeichnet, dass** zumindest ein Bremsvektor (b1,...,b7), welcher die Anfangsposition (p0) mit der zumindest einen virtuellen Endposition (p1,...,p7) verbindet, ermittelt wird und die Einhüllende (E) aus dem zumindest ein Bremsvektor (b1,...,b7) bestimmt wird.

6. Verfahren nach Anspruch 5, **dadurch gekennzeichnet, dass** die Bremsvektoren (b1,...,b7) aus einer Linearkombination von Basisbremsvektoren gebildet werden, wobei jeder Basisbremsvektor einer Einzelachse (Q1, Q2, Q3) zugeordnet ist und die Anfangsposition des Punktes (P) mit einer zugehörigen virtuellen Endposition (p1e) des Punktes (P) verbindet, wobei die zugehörige virtuelle Endposition (p1e) des Punktes (P) aus der Anfangsposition (p0) des Punktes (P), einer vektoriellen Geschwindigkeit (v1, v2, v3) der zugeordneten Einzelachse (Q1, Q2, Q3) und der minimalen Verzögerung (a1, a2, a3) der zugeordneten Einzelachse (Q1, Q2, Q3) ermittelt wird, wobei für jeden Basisbremsvektor jeweils die Annahme getroffen wird, dass die nicht zugeordneten Einzelachsen (Q1, Q2, Q3) sich nicht weiterbewegen.

7. Verfahren nach Anspruch 5 oder 6, **dadurch gekennzeichnet, dass** die Einhüllende (E) als ein erstes Rechteck (R1), welches ein die Bremsvektoren (b1,...,b7) minimal umgebendes Rechteck, dessen Seiten vorzugsweise parallel zum Kinematikkoordinatensystem (CGS) sind, darstellt, berechnet wird, oder die Einhüllende (E) auf einen ersten Quader, der einen die Bremsvektoren (b1,...,b7) minimal umgebenden Quader, dessen Seiten parallel zum Kinematikkoordinatensystem (CGS) sind, darstellt, erweitert wird.

8. Verfahren nach Anspruch 7, **dadurch gekennzeichnet, dass** das erste Rechteck (R1), bzw. der erste Quader, um einen Korrekturwert (h), der zumindest eine Abweichung der Bremsvektoren (b1,...,b7) von virtuellen Teilbewegungen des Punkts (P) von der Anfangsposition (p0) in die jeweiligen virtuellen Endpositionen (p1,...,p7) berücksichtigt, auf ein erweitertes erstes Rechteck (R1'), bzw. einen ersten erweiterten ersten Quader, erweitert wird **und dass** die Einhüllende (E) auf das erweiterte erste Rechteck (R1'), bzw. den ersten erweiterten ersten Quader, erweitert wird.

9. Verfahren nach einem der Ansprüche 1 bis 8, **dadurch gekennzeichnet, dass** in einem Arbeitsraum (W) mit einem Arbeitsraumkoordinatensystem (WCS) ein Sicherheitsbereich (SS) der Kinematik (1) mittels der Einhüllenden (E) erweitert und/oder ein Arbeitsbereich (WS) der Kinematik (1) mittels der Einhüllenden (E) verringert wird, woraufhin ein modifizierter Sicherheitsbereich (SSm) bzw. ein modifizierter Arbeitsbereich (WSm) erzeugt wird.

10. Verfahren nach Anspruch 7, **dadurch gekennzeichnet, dass** das erste Rechteck (R1) bzw. der erste Quader, um einen Korrekturwert (h), der zumindest die Abweichung der Bremsvektoren (b1,...,b7) von virtuellen Teilbewegungen des Punkt von der Anfangsposition (p0) in die jeweiligen virtuellen Endpositionen (p1,...,p7) berücksichtigt, auf ein erweitertes erstes Rechteck (R1'), bzw. einen ersten erweiterten ersten Quader, erweitert wird, **dass** in einem Arbeitsraum (W) mit einem Arbeitsraumkoordinatensystem (WCS) ein Sicherheitsbereich (SS) der Kinematik (1) und/oder ein Arbeitsbereich (WS) der Kinematik (1) vorhanden ist, **dass** die Einhüllende (E) auf ein zweites Rechteck (R2), bzw. einen zweiten Quader, dessen Seiten die Ecken des ersten Rechtecks (R1), bzw. des ersten Quaders, berühren und parallel zum Arbeitsraumkoordinatensystem (WCS) liegen, erweitert wird, **und dass** ein Sicherheitsbereich (SS) der Kinematik (1) mittels der Einhüllenden (E) erweitert und/oder ein Arbeitsbereich (WS) der Kinematik (1) mittels der Einhüllenden (E) verringert wird, woraufhin ein modifizierter Sicherheitsbereich (SSm) bzw. ein modifizierter Arbeitsbereich (WSm) erzeugt wird.

11. Verfahren nach Anspruch 9 oder 10, **dadurch gekennzeichnet, dass** die Anfangsposition (p0) des Punkts (P) entlang der Grenzen des Sicherheitsbereichs (SS) bzw. des Arbeitsbereichs (WS) bewegt wird und der modifizierte Sicherheitsbereich (SSm) durch die Summenmenge aus Sicherheitsbereich (SS) und Einhüllende (E) gebildet wird bzw. der modifizierte Arbeitsbereich (WSm) durch die Differenz von Arbeitsbereich (WS) und Einhüllende (E) gebildet wird.

12. Verfahren nach einem der Ansprüche 9 bis 11, **dadurch gekennzeichnet, dass** der modifizierte Sicherheitsbereich (SSm) bzw. der modifizierte Arbeitsbereich (WSm) überwacht wird und eine Aktion ausgeführt wird, sobald der Punkt (P) den modifizierten Sicherheitsbereich (SSm) betritt bzw. der Punkt den modifizierten Arbeitsbereich (WSm) verlässt.

## Claims

1. Method for controlling a kinematic (1) that is modelled in a kinematics coordinate system (CGS) by means of hingedly interconnected single axles (Q1, Q2, Q3), at least one of the single axles (Q1, Q2, Q3) being connected to an origin (CGSO) of the kinematics coordinate system (CGS), at least one of the single axles (Q1, Q2, Q3) moving relative to the origin (CGSO), and a braking process being initiated within the modelled kinematics (1) at a braking time, wherein , in the event of the braking process of a point (P), that is coupled to a single axle (Q1, Q2, Q3), a virtual end position (p1, ..., p7) of the point (P) is determined for the at least one moving single axle (Q1, Q2, Q3), **characterized in that** an initial position (p0) of the point (P), taken by the point (P) within the kinematics coordinate system (CGS) at the braking time, a vectorial speed (v1) of the at least one single axle (Q1, Q2, Q3), and a minimum deceleration (a1, a2, a3) of the at least one single axle (Q1, Q2, Q3) is used to determine the virtual end position (p1, ..., p7) of the point (P), wherein the vectorial speed (v1) corresponds to an initial speed of the at least one single axle (Q1, Q2, Q3) at the braking time and takes into account an absolute value and a direction of the initial speed and wherein the minimum deceleration (a1, a2, a3) counteracts the vectorial speed (v1) of the at least one moving single axle (Q1, Q2, Q3) in a guaranteed decelerating manner, **and in that** a braking region of the point (P) is determined by using an envelope (E) of the initial position (p0) and of the virtual end position (p1,... ,p7) determined for the at least one single axle (Q1, Q2, Q3), an extent of the envelope (E) being calculated from the initial position (p0) and the virtual end position (p1,... ,p7) determined for the at least one single axle (Q1, Q2, Q3) and the braking region being taken into account when controlling the kinematic (1).

2. Method according to claim 1, **characterized in that** the extent of the envelope (E) is calculated from the initial position (p0), the virtual end position (p1, ..., p7) determined for the at least one single axle (Q1, Q2, Q3), and a virtual partial movement resulting therefrom.

3. Method according to either claim 1 or claim 2, **characterized in that** the at least one virtual end position (p1, ..., p7) of the point (P) is determined from the initial position (p0) of the point (P), a vectorial speed (v1, v2, v3) of each single axle (Q1, Q2, Q3) moved, and a deceleration (a1, a2, a3) of each moved single axle (Q1, Q2, Q3).

4. Method according to any of claims 1 to 3, **characterized in that** at least one further virtual end position (p1', p1") of the point (P) is determined for the point (P), from the initial position (p0), the vectorial speed (v1) of the at least one single axle (Q1, Q2, Q3), and at least one further deceleration (a1', a1") of the at least one single axle (Q1, Q2, Q3) that is greater than the minimum deceleration (a1, a2, a3) of the at least one single axle (Q1, Q2, Q3), **and in that** the braking region of the point (P) is determined using an envelope (E) of the initial position (p0) and the virtual end position (p1, ..., p7) and the at least one further virtual end position (p1', p1"), the extent of the envelope (E) being calculated from the initial position (p0), the virtual end position (p1,... ,p7), and the at least one further virtual end position (p1', p1").

5. Method according to any of claims 1 to 4, **characterized in that** at least one braking vector (b1, ..., b7) which connects the initial position (p0) to the at least one virtual end position (p1, ..., p7) is determined, and the envelope (E) is determined from the at least one braking vector (b1, ..., b7).

6. Method according to claim 5, **characterized in that** the braking vectors (b1, ..., b7) are formed by a linear combination of basis braking vectors, each basis braking vector being assigned to one single axle (Q1, Q2, Q3) and connecting the initial position of the point (P) to an associated virtual end position (p1e) of the point (P), the associated virtual end position (p1e) of the point (P) being determined from the initial position (p0) of the point (P), a vectorial speed (v1, v2, v3) of the assigned single axle (Q1, Q2, Q3), and the minimum deceleration (a1, a2, a3) of the assigned single axle (Q1, Q2, Q3), the assumption being made, for each basis braking vector, that the non-assigned single axles (Q1, Q2, Q3) do not move any further.

7. Method according to either claim 5 or claim 6, **characterized in that** the envelope (E) is calculated as a first rectangle (R1) which is a minimum bounding rectangle of the braking vectors (b1, ... , b7) and the sides of which rectangle are preferably in parallel with the kinematics coordinate system (CGS), or the envelope (E) is calculated as a first cuboid which is a minimum bounding cuboid of the braking vectors (b1, ... , b7) and the sides of which cuboid are in parallel with the kinematics coordinate system (CGS).

8. Method according to claim 7, **characterized in that** the first rectangle (R1) and/or the first cuboid is expanded by a correction value (h), which at least takes into account a deviation of the braking vectors (b1, ..., b7) from virtual partial movements of the point (P) from the initial position (p0) into the respective virtual end positions (p1, ..., p7), to an expanded first rectangle (R1') or to a first expanded first cuboid, **and in that** the envelope (E) is expanded to the expanded first rectangle (R1') and/or the first expanded first cuboid.

9. Method according to any of claims 1 to 8, **characterized in that,** in a working space (W), using a working space coordinate system (WCS), a safety region (SS) of the kinematic (1) is expanded by means of the envelope (E) and/or a working region (WS) of the kinematic (1) is reduced by means of the envelope (E), resulting in a modified safety region (SSm) and/or a modified working region (WSm).

10. Method according to claim 7, **characterized in that** the first rectangle (R1) and/or the first cuboid is expanded, by a correction value (h) which at least takes account into the deviation of the braking vectors (b1, ..., b7) from the virtual partial movements of the point from the initial position (p0) into the respective virtual end positions (p1, ..., p7), to an expanded first rectangle (R1') and/or a first expanded first cuboid, **in that** a safety region (SS) of the kinematic (1) and/or a working region (WS) of the kinematic (1) is provided in a working space (W) using a working space coordinate system (WCS), **in that** the envelope (E) is expanded to a second rectangle (R2) or a second cuboid, the sides of which touch the corners of the first rectangle (R1) or of the first cuboid and are in parallel with the working space coordinate system (WCS), **and in that** a safety region (SS) of the kinematic (1) is expanded by means of the envelope (E) and/or a working region (WS) of the kinematic (1) is reduced by means of the envelope (E), resulting in a modified safety region (SSm) and/or a modified working region (WSm).

11. Method according to either claim 9 or claim 10, **characterized in that** the initial position (p0) of the point (P) is moved along the boundaries of the safety region (SS) or of the working region (WS) and the modified safety region (SSm) is formed from the sum of the safety region (SS) and the envelope (E), and/or the modified working region (WSm) is formed by the difference between the working region (WS) and the envelope (E).

12. Method according to any of claims 9 to 11, **characterized in that** the modified safety region (SSm) and/or the modified working region (WSm) is monitored, and an action is taken as soon as the point (P) enters the modified safety region (SSm) and/or the point leaves the modified working region (WSm).

## Revendications

1. Procédé permettant la commande d'une cinématique (1), laquelle est modélisée dans un système de coordonnées de cinématique (CGS) au moyen d'axes individuels (Q1, Q2, Q3) reliés les uns aux autres de manière articulée, dans lequel au moins l'un des axes individuels (Q1, Q2, Q3) est relié à une origine (CGSO) du système de coordonnées de cinématique (CGS), au moins l'un des axes individuels (Q1, Q2, Q3) se déplace par rapport à l'origine (CGSO) et, à un instant de freinage, un processus de freinage est lancé dans la cinématique (1) modélisée, dans lequel, lors du processus de freinage, pour un point (P) couplé à un axe individuel (Q1,Q2,Q3) pour l'au moins un axe individuel (Q1, Q2, Q3) déplacé, une position finale virtuelle (p1,...,p7) du point (P) est déterminée,
**caractérisé en ce**
**que**, pour une détermination de la position finale virtuelle (p1, ..., p7) du point (P), une position de départ (p0) du point (P), laquelle est prise par le point (P) à l'instant de freinage dans le système de coordonnées de cinématique (CGS), une vitesse vectorielle (v1) de l'au moins un axe individuel (Q1, Q2, Q3) déplacé et un retard minimal (a1, a2, a3) de l'au moins un axe individuel (Q1, Q2, Q3) déplacé sont utilisés, dans lequel la vitesse vectorielle (v1) correspond à une vitesse de départ de l'au moins un axe individuel (Q1, Q2, Q3) déplacé à l'instant de freinage et tient compte d'une valeur ainsi que d'une direction de la vitesse de départ, et dans lequel, à partir du retard minimal (a1, a2, a2), la vitesse vectorielle (v1) de l'au moins un axe individuel (Q1, Q2, Q3) déplacé est contrecarrée de manière à ce que son retard soit garanti ;
**et en ce qu'**une plage de freinage du point (P) est spécifiée par une enveloppe (E) de la position de départ (p0) et de la position finale virtuelle (p1,...,p7) déterminée pour l'au moins un axe individuel (Q1, Q2, Q3) déplacé, dans lequel une expansion de l'enveloppe (E) est calculée à partir de la position de départ (p0) et de la position finale virtuelle (p1,...,p7) déterminée pour l'au moins un axe individuel (Q1, Q2, Q3) déplacé et la plage de freinage est prise en compte lors de la commande de la cinématique (1).

2. Procédé selon la revendication 1, **caractérisé en ce que** l'expansion de l'enveloppe (E) est calculée à partir de la position de départ (p0), de la position finale virtuelle (p1,...,p7) déterminée pour l'au moins un axe individuel (Q1, Q2, Q3) déplacé et d'un mouvement partiel virtuel qui en découle.

3. Procédé selon la revendication 1 ou 2, **caractérisé en ce que** l'au moins une position finale virtuelle (p1,...,p7) du point (P) est déterminée à partir de la position de départ (p0) du point (P), d'une vitesse vectorielle (v1, v2, v3) de chaque axe individuel (Q1,Q2,Q3) déplacé et d'un retard (a1, a2, a3) de chaque axe individuel (Q1, Q2, Q3) déplacé.

4. Procédé selon l'une des revendications 1 à 3, **caractérisé en ce que,** pour le point (P), au moins une autre position finale virtuelle (p1', p1") du point (P) est déterminée à partir de la position de départ (p0), de la vitesse vectorielle (v1) de l'au moins un axe individuel (Q1,Q2,Q3) et d'au moins un autre retard (a1', a") de l'au moins un axe individuel (Q1,Q2,Q3) qui est supérieur au retard minimal (a1, a2, a3) de l'au moins un axe individuel (Q1,Q2,Q3), **et en ce que** la plage de freinage du point (P) est spécifiée par une enveloppe (E) de la position de départ (p0), de la position finale virtuelle (p1,...,p7) et de l'au moins une autre position finale virtuelle (p1',p1"), dans lequel l'expansion de l'enveloppe (E) est calculée à partir de la position de départ (p0), de la position finale virtuelle (p1,...,p) et de l'au moins une autre position finale virtuelle (p1',p1").

5. Procédé selon l'une des revendications 1 à 4, **caractérisé en ce qu'**au moins un vecteur de freinage (b1,...,b7), lequel relie la position de départ (p0) à l'au moins une position finale virtuelle (p1,...,p7), est déterminé et l'enveloppe (E) est spécifiée à partir de l'au moins un vecteur de freinage (b1,...,b7).

6. Procédé selon la revendication 5, **caractérisé en ce que** les vecteurs de freinage (b1,...,b7) sont formés d'une combinaison linéaire de vecteurs de freinage de base, dans lequel chaque vecteur de freinage de base est associé à un axe individuel (Q1, Q2, Q3) et relie la position de départ du point (P) à une position finale virtuelle associée (p1e) du point (P), dans lequel la position finale virtuelle associée (p1e) du point (P) est déterminée à partir de la position de départ (p0) du point (P), d'une vitesse vectorielle (v1, v2, v3) de l'axe individuel (Q1, Q2, Q3) associé et du retard minimal (a1, a2, a3) de l'axe individuel (Q1, Q2, Q3) associé, dans lequel, pour chaque vecteur de freinage de base, l'hypothèse selon laquelle les axes individuels (Q1, Q2, Q3) non associés ne se déplacent plus est respectivement prise.

7. Procédé selon la revendication 5 ou 6, **caractérisé en ce que** l'enveloppe (E) est calculée sous forme d'un premier rectangle (R1) qui représente un rectangle entourant au minimum les vecteurs de freinage (b1,...,b7) et dont les côtés sont de préférence parallèles au système de coordonnées de cinématique (CGS), ou l'enveloppe (E) est élargie à un premier parallélépipède rectangle qui représente un parallélépipède rectangle entourant au minimum les vecteurs de freinage (b1,...,b7) et dont les côtés sont parallèles au système de coordonnées de cinématique (CGS).

8. Procédé selon la revendication 7, **caractérisé en ce que** le premier rectangle (R1) ou le premier parallélépipède rectangle est élargi en un premier rectangle élargi (R1') ou un premier parallélépipède rectangle premier élargi d'une valeur de correction (h) qui tient compte au moins d'un écart des vecteurs de freinage (b1,...,b7) par rapport à des mouvements partiels virtuels du point (P) de la position de départ (p0) vers les positions finales virtuelles (p1,...,p7) respectives, **et en ce que** l'enveloppe (E) est élargie au premier rectangle élargi (R1') ou au premier parallélépipède rectangle premier élargi.

9. Procédé selon l'une des revendications 1 à 8, **caractérisé en ce que,** dans un espace de travail (W) comportant un système de coordonnées d'espace de travail (WCS), une plage de sécurité (SS) de la cinématique (1) est élargie au moyen de l'enveloppe (E) et/ou une plage de travail (WS) de la cinématique (1) est réduite au moyen de l'enveloppe (E), après quoi une plage de sécurité modifiée (SSm) ou une plage de travail modifiée (WSm) est produite.

10. Procédé selon la revendication 7, **caractérisé en ce que** le premier rectangle (R1) ou le premier parallélépipède rectangle est élargi en un premier rectangle élargi (R1') ou un premier parallélépipède rectangle premier élargi d'une valeur de correction (h) qui tient compte au moins de l'écart des vecteurs de freinage (b1,...,b7) par rapport à des mouvements partiels virtuels du point de la position de départ (p0) vers les positions finales virtuelles (p1,...,p7) respectives, **en ce que**, dans un espace de travail (W) comportant un système de coordonnées d'espace de travail (WCS), une plage de sécurité (SS) de la cinématique (1) et/ou une plage de travail (WS) de la cinématique (1) sont présentes, **en ce que** l'enveloppe (E) est élargie en un second rectangle (R2) ou un second parallélépipède rectangle dont les côtés touchent les coins du premier rectangle (R1) ou du premier parallélépipède rectangle et sont parallèles au système de coordonnées d'espace de travail (WCS), **et en ce qu'**une plage de sécurité (SS) de la cinématique (1) est élargie au moyen de l'enveloppe (E) et/ou une plage de travail (WS) de la cinématique (1) est réduite au moyen de l'enveloppe (E), après quoi une plage de sécurité modifiée (SSm) ou une plage de travail modifiée (WSm) est produite.

11. Procédé selon la revendication 9 ou 10, **caractérisé en ce que** la position de départ (p0) du point (P) est déplacée le long des limites de la plage de sécurité (SS) ou de la plage de travail (WS) et la plage de sécurité modifiée (SSm) est formée par la quantité totale de la plage de sécurité (SS) et de l'enveloppe (E) ou la plage de travail modifiée (WSm) est formée par la différence entre la plage de travail (WS) et l'enveloppe (E).

12. Procédé selon l'une des revendications 9 à 11, **caractérisé en ce que** la plage de sécurité modifiée (SSm) ou la plage de travail modifiée (WSm) est surveillée et une action est réalisée dès que le point (P) entre dans la plage de sécurité modifiée (SSm) ou que le point sort de la plage de travail modifiée (WSm).
